# EUROPÄISCHE PATENTSCHRIFT

(11) **EP 3 515 251 B1**
(45) Veröffentlichungstag und Bekanntmachung des Hinweises auf die Patenterteilung: **02.12.2020**
(21) Anmeldenummer: 17777533.5
(22) Anmeldetag: 21.09.2017
(51) Int. Cl.: A47C 20/04, A47C 1/024, A47C 1/032, A47B 9/00

(54) **ELEKTROMOTORISCHER MÖBELANTRIEB UND MÖBEL**
ELECTRIC MOTOR-DRIVEN FURNITURE DRIVE MECHANISM AND ITEM OF FURNITURE
ENTRAÎNEMENT À MOTEUR ÉLECTRIQUE POUR MEUBLE ET MEUBLE

(30) Priorität: 21.09.2016 DE 202016105266 U
(43) Veröffentlichungstag der Anmeldung: 31.07.2019
(73) Patentinhaber: DewertOkin GmbH, 32278 Kirchlengern (DE)
(72) Erfinder: HILLE, Armin, 33659 Bielefeld (DE)
(74) Vertreter: Kleine, Hubertus
(86) Internationale Anmeldenummer: PCT/EP2017/073950
(87) Internationale Veröffentlichungsnummer: WO 2018/055057

(56) Entgegenhaltungen:
- EP-A1- 2 752 130
- WO-A1-2017/114945
- JP-A- 2005 027 735

## Beschreibung

Die Erfindung betrifft einen elektromotorischen Möbelantrieb nach dem Oberbegriff des Anspruchs 1 sowie ein Möbel mit einem solchen Möbelantrieb.

Ein derartiger elektromotorischer Möbelantrieb dient zur Verstellung von beweglichen Möbeln und/oder Möbelbauteilen. Dabei wird die von dem elektromotorischen Möbelantrieb erzeugte Verstellbewegung und Antriebskraft auf das jeweilige bewegliche Möbelbauteil übertragen, wobei sich der elektromotorische Möbelantrieb an einem festen Möbelbauteil abstützt und das bewegliche Möbelbauteil relativ zu dem festen Möbelbauteil verstellt. Der elektromotorische Möbelantrieb kann auch zwischen zwei beweglichen Möbelbauteilen angebracht sein, wobei er diese relativ zueinander verstellen kann.

Ein verstellbares Möbel, insbesondere Funktionsmöbel, ist mit mindestens einem elektromotorischen Möbelantrieb versehen. Ein solcher elektromotorischer Möbelantrieb ist in dem Möbel angebracht, welches feste und bewegliche Möbelbauteile aufweist. Feste Möbelbauteile sind z.B. Rahmenbauelemente, Platten u.dgl.. Bewegliche Möbelbauteile sind z.B. feste oder federnachgiebige Stützflächen einer Polsterung oder einer Matratze des Sitz- und/oder Liegemöbels. Es können auch z.B. höhenverstellbare Standbeine eines Tisches, Pultes oder dergleichen sein. Beispielsweise sind elektrische Verstellmotoren, auch Verstellantriebe genannt, für bewegbare Sesselbauteile in einen Sessel eingebaut. Bewegliche Möbelbauteile sind mit so genannten Bewegungsbeschlägen beweglich an dem Möbel oder auch an Möbelbauteilen angebracht.

Elektromotorische Möbelantriebe sind aus dem Stand der Technik in einer Vielzahl von unterschiedlichen Ausführungen für unterschiedliche Einsatzfälle und Zwecke bekannt, z.B. als Einzelantriebe, Doppel- und Mehrfachantriebe.

Die elektrischen Verstellmotoren der elektromotorischen Möbelantriebe werden üblicherweise mittels einer Betätigungseinrichtung manuell bedient, wobei eine Verstellung des jeweiligen Motors auf Knopfdruck erfolgt. Diese Betätigungseinrichtungen sind z.B. über eine Anschlussleitung mit einer Steuerung des elektromotorischen Möbelantriebs verbunden. Es sind aber auch drahtlose Betätigungseinrichtungen möglich, z.B. per Funk, Infrarot, Ultraschall. Sessel weisen z.B. in einigen Ausführungen eingebaute Betätigungseinrichtungen auf.

Bei Möbeln, z.B. höhenverstellbaren Möbeln wie beispielsweise Tische, Aufstehsessel, kann es Gefahrenstellen durch Klemmen und Quetschen sowohl für einen Bediener als auch neben dem Möbel befindliche Personen, Tiere und Gegenstände geben. Diesbezüglich sind unterschiedliche Maßnahmen zum Schutz vor einem Klemmen oder Quetschen vorgeschlagen worden. Im Hinblick auf Personen und Tiere wird diesbezüglich in der Regel von einem Einklemmschutz gesprochen, im Hinblick auf Gegenstände, z.B. unter einem Tisch stehenden Rollcontainern oder Anlagen der Computertechnik, häufig von einem Systemschutz.

So gibt es beispielsweise kapazitive Sensorsysteme, die z.B. die metallenen Beschläge eines beweglichen Möbelbauteils als Antenne nutzen und so einen Annäherungs- und/oder Berührungssensor bilden können. Es sind auch Ultraschallsensoren vorgeschlagen worden.

Das Dokument DE 297 18 426 U1 sei hier beispielhaft genannt. Es beschreibt eine Verstelleinrichtung für bewegliche Möbelteile eines Möbels mit einem elektromotorischen Möbelantrieb und einem damit gekoppelten Beschlag und/oder einem Rahmen aus Metall und mit einer Sensoreinheit zum Erkennen einer Annäherung oder Berührung des Beschlags oder des Rahmens sowie mit einer Steuereinheit. Dabei kann der Beschlag selbst als Antenne ausgebildet sein.

Ein Nachteil wird darin gesehen, dass aufgrund unterschiedlicher Umgebungsbedingungen der als Antenne ausgebildete Beschlag nicht immer eindeutige Ergebnisse im Sinne eines Einklemmschutzes bietet. Wenn hierbei das elektrische oder elektromagnetische Feld derart gestaltet wird, dass man signifikante und messtechnische reproduzierbare Erfolge im Sinne eines reellen Einklemmschutzes auch tatsächlich erzielen kann, schreitet das System von einem ursprünglich gewollten Charakter eines Bereichssensors zu einem Berührungssensor. Auch ist ein Ansprechen bei Gegenständen im Sinne eines Systemschutzes nicht sicher gegeben.

Bei einer Sensierung mit Ultraschall ist es im Wesentlichen umgekehrt. Mit Ultraschallsensoren lassen sich größere Bereiche sehr gut überwachen, wobei es bei kleineren Abständen (wie es bei einem Möbel häufig der Fall ist) derzeit noch einige Abstriche gibt. Wenn sich nämlich ein Gegenstand oder ein kleines Tier vor Inbetriebnahme schon zwischen zwei Beschlagteilen, insbesondere bei einem Scherenbeschlag (Fußteil Ruhesessel sei als Beispiel genannt), befindet, darf ein Einschalten des zugehörigen Antriebs gar nicht erst erfolgen.

Aus der Druckschrift JP 2005 027735 A ist bei einem elektromotorisch verstellbaren Liegemöbel ein Einklemmschutz bekannt, bei dem die Sensoreinheit ein Piezo-Kabel umfasst. Eine Formveränderung des Piezo-Kabels, beispielsweise ein Biegen oder ein Quetschen, führt zu einer Druckveränderung an einem Piezo-Material, wodurch eine Spannung aufgebaut wird, die an den den beiden Leitern anliegt und somit an einem Anschluss des Piezo-Kabels abgegriffen und detektiert werden kann. Gemäß der Druckschrift wird die abgegebene Spannung überwacht. Ein Überschreiten eines vorgegebenen Schwellenwerts löst den Einklemmschutz aus, woraufhin ein Verstellmotor des Liegemöbels gestoppt wird.

Die Betriebszuverlässigkeit bei größeren Möbeln ist das größte Problem, weil Störungen durch fehlerhaftes Ableiten des Feldes und durch fehlerhaftes Beaufschlagen des Feldes entstehen können. Diese können Dank der Auswertelektronik durch die automatische Offsetkorrektur zwar reduziert werden, jedoch können einzelne Abschnitte am Möbel nicht detailliert überwacht werden. Ferner ist die Auswertung nicht räumlich begrenzt - geht also über die Grenzen des Möbels hinaus, was zu Fehlerkennungen führt - und reagiert nicht auf tote Gegenstände.

Die Aufgabe der vorliegenden Erfindung ist es daher, einen verbesserten elektromotorischen Möbelantrieb mit einer verbesserten Erfassungseinrichtung als Einklemmschutz bzw. Systemschutz zu schaffen.

Die Aufgabe wird durch einen elektromotorischen Möbelantrieb bzw. ein Möbel mit den Merkmalen des jeweiligen unabhängigen Anspruchs gelöst.

Ein erfindungsgemäßen elektromotorischer Möbelantrieb zur Verstellung von beweglichen Bauteilen eines Möbels, insbesondere Funktionsmöbel, weist mindestens einen elektromotorischen Verstellantrieb mit einer Steuervorrichtung und mindestens einer Bedienungseinrichtung, eine Überwachungsvorrichtung mit mindestens einer Erfassungseinrichtung zur Überwachung mindestens eines Überwachungsbereiches und Bildung eines Einklemmschutzes des zuzuordnenden Möbels auf. Die mindestens eine Erfassungseinrichtung weist mindestens eine Sensoreinheit auf, die als ein Piezo-Kabel ausgebildet ist oder die ein Piezo-Kabel umfasst.

Erfindungsgemäß ist die Überwachungsvorrichtung dazu eingerichtet, Signale der mindestens einen Erfassungseinrichtung im Hinblick auf einen Signalverlauf auszuwerten. Dabei kann das Signal anhand des Signalverlaufs verschiedenen Ereignissen zugeordnet werden. Durch Betrachtung gemessener Größen des Verlaufs des Signals können tatsächliche Einklemmereignisse von Störereignissen oder anderen Ereignissen unterschieden werden, wodurch die Betriebssicherheit und Zuverlässigkeit steigt.

Dabei sind die Überwachungsvorrichtung und die Steuervorrichtung dazu eingerichtet, den mindestens einen elektromotorischen Verstellantrieb zu verlangsamen, zu stoppen und/oder in seiner Bewegungsrichtung zumindest kurzfristig umzukehren, falls ein Einklemmereignis erkannt wird.

Ein Piezo-Kabel weist üblicherweise mindestens zwei (metallische) Leiter auf, die durch ein Isoliermaterial voneinander isoliert sind. Bei einem Piezo-Kabel ist zumindest abschnittsweise das Isoliermaterial durch ein Piezo-Material gebildet oder weist ein Piezo-Material auf.

Das Piezo-Kabel kann einfach entlang z.B. von Kanten oder Flächen des Möbels entlang geführt werden, an denen eine Klemmgefahr vorliegt. Das Piezo-Kabel kann vorteilhaft einfach und flexibel an einen zu überwachenden Bereich des Möbels angepasst werden, auch wenn dieser eine geometrisch komplexe Gestalt aufweist.

Prinzipiell ist das Piezo-Kabel mit dem Möbel- oder mit dem Möbelbauteil verbunden. Die Verbindung selbst ist vorzugsweise mittelbar, wobei im Falle eines Klemmens sich die Form- und/oder Lage des Piezo-Kabels relativ zum Möbelbauteil ändert. In einem ersten Klemmfall ändert sich der Abstand beziehungsweise die Form des Piezo-Kabels relativ zum Möbelbauteil örtlich im Bereich des Klemmens. Dabei treten insbesondere Verbiegungen an dem Piezo-Kabel auf, welche sodann die elektrische Spannung zum Auswerten des Klemmfalls generieren.

In einem zweiten Klemmfall erfolgt eine Form- und/oder Lageänderung sowohl des Piezo-Kabels als auch des damit in Wirkverbindung stehenden Möbelbauteils. Als Ursache sei ein sehr deutlicher Klemmfall genannt oder ein recht biegeweiches Möbelbauteil.

In einem weiteren Klemmfall steht das Piezo-Kabel in einer unmittelbaren Verbindung mit dem Möbelbauteil, wobei Form- und/oder Lageänderungen des Möbelbauteils direkt auf das Piezo-Kabel übertragen werden.

Ein erfindungsgemäßes Möbel weist einen derartigen Möbelantrieb auf. Der mindestens eine Überwachungsbereich mit der Erfassungseinrichtung kann ein dreidimensionaler Bereich sein, der unterhalb des Möbels zwischen Beschlagteilen und Gelenken angeordnet ist. Somit ist es auch möglich, dass innere Bereiche des Möbels derart überwacht werden, dass Gegenstände oder/und Tiere, die in einem nicht benutzten Möbel eingedrungen sind, erfasst werden und vor Schaden bewahrt werden können. Ein Einklemmschutz schützt auch das Möbel bei eingeklemmten und möglichen eingeklemmten Gegenständen vor Beschädigungen.

In einer Ausführung ist die Sensoreinheit mit mindestens einem Träger als Unterfütterung versehen. Damit kann die Sensoreinheit bei Betätigung zur Erzeugung eines eindeutigen Signals gebogen werden. Der Träger kann zusätzlich für eine einfache Montage benutzt werden.

Hierzu kann die Sensoreinheit mit mindestens einem Mantel versehen sein. Damit wird ein einfacher, aber wirkungsvoller Schutz gebildet.

In einer weiteren Ausführung ist die Sensoreinheit nach Verformung durch eine Betätigungskraft automatisch rückstellbar. So ist die Erfassungseinrichtung schnell wieder einsatzbereit. Der Mantel kann auch für eine automatische Rückstellung aufgrund eines elastischen Materials verwendet werden.

Es ist vorteilhaft, dass die Sensoreinheit zwei elektrisch leitende Leitungen als Anschlussleitungen aufweist. Dabei kann eine Leitung als Abschirmung verwendet werden. So ist eine Störanfälligkeit durch externe elektromagnetische Felder verringert.

In einer Ausführung ist die Sensoreinheit als ein Piezo-Kabel mit rundem Querschnitt ausgebildet. Dies ist besonders kostengünstig herstellbar.

Alternativ kann die Sensoreinheit als Flachkabel ausgebildet sein, wodurch eine vorteilhafte Platzeinsparung ermöglicht wird.

In einer weiteren Ausführung kann das Flachkabel eine flexible Leiterplatte sein. Dies ist z.B. vorteilhaft für eine automatische Fertigung
In einer weiteren vorteilhaften Ausgestaltung des elektromotorischen Möbelantriebs ist die Überwachungsvorrichtung dazu eingerichtet, die Signale der mindestens einen Erfassungseinrichtung zudem im Hinblick auf eine Amplitude auszuwerten. In einer bevorzugten Weiterbildung kann vorgesehen sein, dass bestimmte Erschütterungen wie z.B. Klopfen auf eine Tischplatte oder Antippen der Tischplatte in einen bestimmten, vorgegebenen Rhythmus (Muster) erkannt werden. Ein oder mehrere Klopf- bzw. Tippmuster können voneinander unterscheiden werden und beispielsweise zur Steuerung der Verstellantriebe verwendet werden.

Es kann weiter vorgesehen sein, dass die Steuereinrichtung oder die Überwachungseinheit des Möbelantriebs mindestens einen separaten Signal- oder Schaltausgang aufweist, der nach Erkennen eines vorgegebenen oder anlernbaren Klopf- bzw. Tippmusters aktiviert wird und angeschlossene Geräte, wie z.B. eine Leuchte, ansteuert bzw. schaltet.

Die Erfindung lässt sich bei jedem Möbel mit Quetsch- und Scherstellen in der Gefahrenzone als Einklemmschutz bzw. als Systemschutz verwenden.

Anhand der beigefügten Zeichnungen wird die Erfindung näher erläutert. Es zeigen:
- Fig. 1: eine schematische Darstellung eines beispielhaften Möbels mit einem Ausführungsbeispiel eines erfindungsgemäßen elektromotorischen Möbelantriebs mit einer erfindungsgemäßen Erfassungseinrichtung;
- Fig. 2: eine schematische Darstellung der erfindungsgemäßen Erfassungseinrichtung nach Fig. 1 in einem unbetätigten Zustand;
- Fig. 3: die Erfassungseinrichtung nach Fig. 2 in einem betätigten Zustand;
- Fig. 4: eine schematische Darstellung einer Variante der erfindungsgemäßen Erfassungseinrichtung nach Fig. 1 in einem unbetätigten Zustand; und
- Fig. 5: die Erfassungseinrichtung nach Fig. 4 in einem betätigten Zustand;

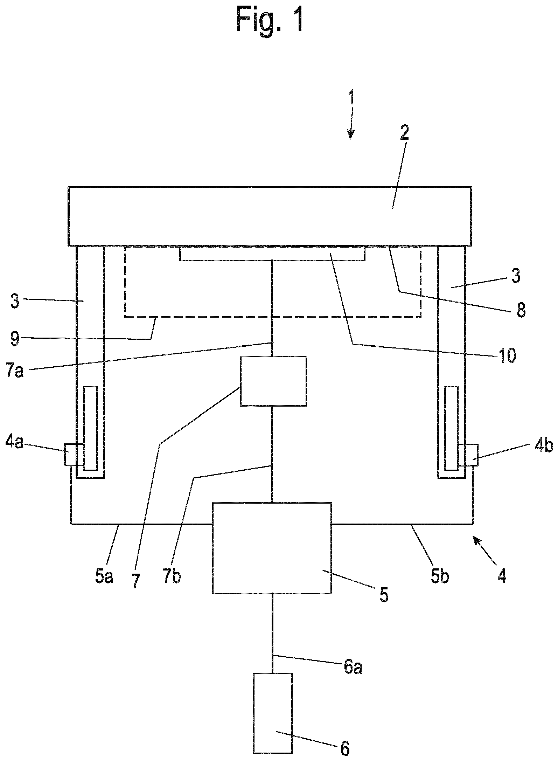

Fig. 1 zeigt eine schematische Darstellung eines beispielhaften Möbels 1 mit einem Ausführungsbeispiel eines erfindungsgemäßen elektromotorischen Möbelantriebs 4 mit einer erfindungsgemäßen Erfassungseinrichtung 10.

Das Möbel 1 ist hier ein so genanntes Funktionsmöbel, in diesem Beispiel ein höhenverstellbarer Tisch, mit einer Platte 2, die auf höhenverstellbaren Standbeinen 3 steht, von denen hier nur zwei gezeigt sind. Für eine Verstellfunktion der Standbeine 3 sind hier stellvertretend zwei Verstellantriebe 4a, 4b dargestellt. So kann z.B. jedes Standbein 3 einen Verstellantrieb 4a, 4b aufweisen

Der elektromotorische Möbelantrieb 4 umfasst mindestens einen Verstellantrieb 4a, 4b, eine Steuervorrichtung 5 und eine Bedieneinheit 6. Die Verstellantriebe 4a, 4b sind zur Verstellung der höhenverstellbaren Standbeine 3 und somit der Platte 5 vorgesehen und mit der Steuervorrichtung 5 über Antriebsleitungen 5a, 5b elektrisch verbunden. Die Bedieneinheit 6 dient zur Betätigung der Verstellantriebe 4a, 4b und ist mit der Steuervorrichtung 5 entweder mit einem elektrisch leitenden Kabel als drahtgebundene Übertragungsstrecke 6a angeschlossen oder über eine drahtlose Übertragungsstrecke 6a mit der Steuervorrichtung 5 verbunden.

Der elektromotorische Möbelantrieb 4 weist außerdem eine Überwachungseinheit 7 mit mindestens einer Erfassungseinrichtung 10 zur Realisierung eines Einklemmschutzes auf. Bei dem hier dargestellten Beispiel kann eine Unterseite der Platte 2 eine Einklemmgefahr an einer Klemmkante 8 für Personen, Tiere und Gegenstände darstellen. Ein Überwachungsbereich 9, in welchem eine solche Einklemmgefahr bestehen kann, ist nur schematisch angedeutet und gestrichelt gezeichnet.

Die Erfassungseinrichtung 10 ist mit der Überwachungseinheit 7 über eine Anschlussleitung 7a verbunden, wobei die Überwachungseinheit 7 mit der Steuervorrichtung 5 über eine weitere Anschlussleitung 7b verbunden ist. Die Überwachungseinheit 7 kann auch Bestandteil der Steuervorrichtung 5 sein.

Weiter ist es denkbar, dass die Überwachungseinheit 7 Bestandteil der Bedieneinheit 5 ist, insbesondere wenn diese am Möbel montiert ist und/oder wenn diese dazu ausgelegt ist, Ströme der Verstellantriebe 4a, 4b unmittelbar zu schalten. Die Steuereinrichtung 5 kann auch Bestandteil zumindest eines Standbeins 1, eines Verstellantriebs 4a, 4b und/oder eines Möbelbauteils beispielsweise der Platte 2 sein.

Beispielhaft ist eine Erfassungseinrichtung 10 dargestellt. Es kann je nach Geometrie und Abmessung des überwachten Möbels sinnvoll sein, mehrere Erfassungseinrichtungen 10 zu verwenden, beispielsweise wenn Überwachungsbereiche entfernt voneinander liegen oder sehr groß sind. Aus Gründen der Betriebssicherheit ist es vorteilhaft, eine einzelne Erfassungseinrichtung 10 nicht zu groß, insbesondere nicht zu lang, auszubilden, um eine Antennenwirkung gegenüber elektrischen Störsignalen zu begrenzen. Eine Länge von weniger als 2 Metern (m) und insbesondere weniger als 1 m ist diesbezüglich bevorzugt.

Um mehr als eine Erfassungseinrichtung verwenden zu können, kann die Überwachungseinheit 7 mehr als einen Eingang zum Anschluss jeweils einer Erfassungseinrichtung 10 aufweisen, die bevorzugt unabhängig voneinander elektrisch ausgewertet werden. Eine Auswertung kann dabei parallel erfolgen, oder ein einem Zeit-Multiplexverfahren in kurzen Zeitabständen rotierend nacheinander. Letzteres ermöglicht es, eine Überwachungseinheit 7 mit mehreren Eingängen mit geringem Schaltungsaufwand zu realisieren.

Zur Auswertung der Eingangssignale umfasst die Überwachungseinheit 7 vorteilhaft mindestens einen Filter, mindestens einen Verstärker, ggf. mit einstellbarem Verstärkungsfaktor und/oder eine Eingangsschutzschaltung zur Spannungsteilung und/oder Begrenzung.

Auch ist es möglich, mehrere unabhängige Überwachungseinheiten 7 einzusetzen, deren Ausgangssignale dann von der Steuerungseinheit 5 ausgewertet werden.

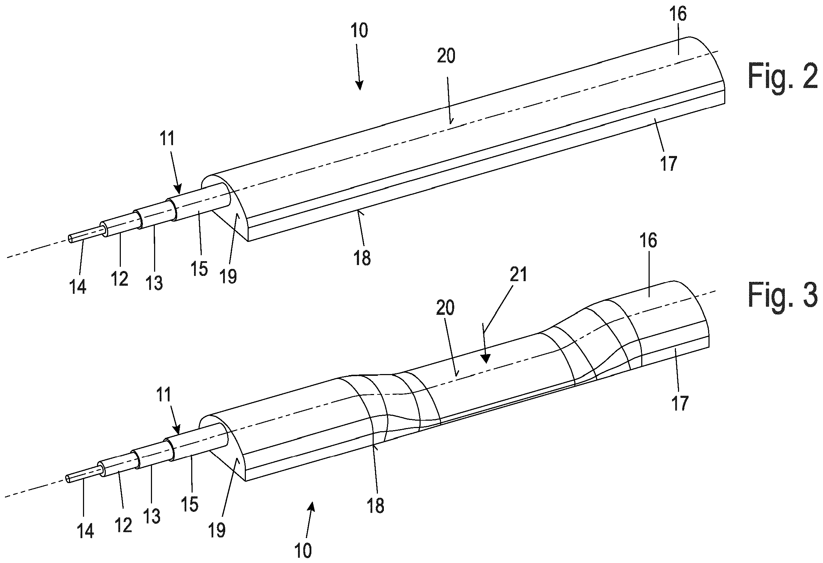

Fig. 2 zeigt eine schematische Darstellung der erfindungsgemäßen Erfassungseinrichtung 10 nach Fig. 1 in einem unbetätigten Zustand, und Fig. 3 zeigt dazu einen betätigten Zustand.

Die Erfassungseinrichtung 10 ist mit mindestens einer Sensoreinheit 11 ausgerüstet.

Die Sensoreinheit 11 weist ein so genanntes Piezo-Kabel auf und umfasst ein Sensorelement 12, zwei elektrisch leitende Leitungen 13, 14 und eine Isolierung 15.

Die Sensoreinheit 11 ist in einem Mantel 16 eingefügt und auf einem Träger 17 befestigt.

Der Träger 17 weist eine Befestigungsseite 18 auf, mit welcher die Erfassungseinrichtung 10 an der Klemmkante 8 des Möbels 1 befestigt werden kann, z.B. geschraubt, geklebt, getackert usw.

Die freie Oberfläche des Mantels 16, welche hier der Befestigungsseite 18 gegenüberliegt, weist einen Betätigungsseite 20 auf, die durch Einwirkung einer Betätigungskraft 21 gegen den Träger 17 deformiert wird.

Bei Einwirkung der Betätigungskraft 21 wird das Piezo-Kabel der Sensoreinheit 11 durch den Mantel 16 gebogen und erzeugt ein elektrische Signal (eine elektrische Spannung, einen Spannungsimpuls oder auch mehrere Spannungsimpulse), welches von den Leitungen 13, 14 elektrisch leitend erfasst wird und über die Anschlussleitung 7a an die Überwachungseinheit 7 übertragen wird. In diesem Beispiel verstärkt die Überwachungseinheit 7 das Signal und wertet es dergestalt aus, dass im Falle einer erfassten Einklemmung die Steuereinrichtung 5 ein Signal zur Abschaltung der Verstellantriebe 4a, 4b erhält, wenn diese zuvor eingeschaltet waren. Wenn die Verstellantriebe 4a, 4b zuvor nicht eingeschaltet waren, wird die Steuereinrichtung 5 durch das Signal derart beeinflusst, dass eine Einschaltung der Verstellantriebe 4a, 4b nicht erfolgen kann. Es ist auch möglich, dass die Verstellantriebe 4a, 4b in diesen Fällen kurzzeitig in eine entgegengesetzte Fahrtrichtung automatisch gefahren werden.

Ein verformtes und im/am Möbel 1 beliebig verlegtes Kabel in Form der Erfassungseinrichtung 10 oder/und als Sensoreinheit 11 liefert im unbetätigten Zustand kein elektrisches Signal an den Leitungen 13, 14, sondern nur im betätigten Zustand.

Ein verformtes und im/am Möbel 1 beliebig verlegtes Kabel in Form einer als Piezo-Kabel ausgebildeten Erfassungseinrichtung 10 oder/und Sensoreinheit 11 liefert im jeweiligen Verharrungszustand kein elektrisches Signal an den Leitungen 13, 14, sondern nur im Zustand während der Betätigung. Dieses elektrische Signal ist als Spannungssignal ausgebildet.

Die Erfassungseinrichtung 10 mit dem Piezo-Kabel als Sensoreinheit 11 wird im Betätigungsfall, d.h. im Einklemmfall, gebogen oder gequetscht, wodurch enthaltenes Piezo-Material komprimiert wird.

Das bei der Verformung des Piezo-Kabels der Sensoreinheit 11 entstehende elektrische Signal (elektrische Spannung) entsteht durch eine Verformung bzw. Verbiegung der Sensoreinheit 11. Damit bei der Einwirkung einer Betätigungskraft 21 diese Verbiegung des Piezo-Kabels entsteht, ist bei dem dargestellten Ausführungsbeispiel die Sensoreinheit 11 von dem Mantel 16, z.B. aus Schaumstoff, umgeben, bzw. durch den Träger 17 unterfüttert.

Eine solche Unterfütterung kann z.B. 1 bis 2 mm Dicke aufweisen, damit verwertbare Signale für die Überwachungseinheit 7 entstehen.

Die Sensoreinheit 11 liefert als Piezo-Kabel mit dem Sensorelement 12 als piezoelektrisches Bauelement (z.B. Schichten oder Wickel oder ähnliches aus einem geeigneten Werkstoff wie z.B. einem Thermoplast wie Polyvinylidenfluorid - PVDF) bereits eine Spannung, die von z.B. einem Mikrokontroller der Überwachungseinheit 7 auf einfache Weise verarbeitet werden kann.

Die Erfassungseinrichtung 10 bietet auf diese Weise eine beliebige räumliche Verlegung, z.B. an dem Möbel 1.

Nach Beendigung der Betätigung durch die Betätigungskraft 21 stellt sich die durch die Betätigungskraft 21 bewirkte Verformung der Erfassungseinrichtung 10 wieder in den unbetätigten Zustand nach Fig. 2 zurück. Ein erneutes Verformen kann danach wieder erfolgen.

In einer alternativen Ausgestaltung kann die Sensoreinheit 11 das Piezo-Kabel auch ohne einen Träger 17, mit dem es unterfüttert ist, oder Mantel 16, in den es eingebettet ist, aufweisen. In dem Fall wird bei direktem Einklemmen die unmittelbare Verformung des Piezo-Material detektiert, oder auch eine indirekte Verformung durch eine Verbiegung des Möbelteils, an dem die Sensoreinheit 11 angeordnet ist.

Das Piezo-Kabel kann beispielsweise unmittelbar oder mit einem unterfütternden Träger 17 in eine Nut an der Unterseite einer Tischplatte eingelassen sein.

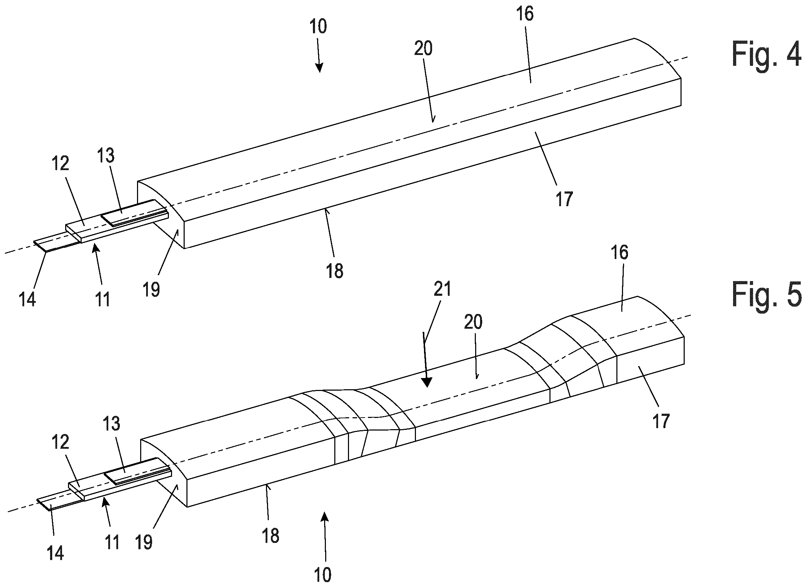

Fig. 4 und 5 zeigen eine schematische Darstellung einer Variante der erfindungsgemäßen Erfassungseinrichtung 10 nach Fig. 1 in einem unbetätigten Zustand und in einem betätigten Zustand.

In dieser Variante besteht die Sensoreinheit 11 im Gegensatz zu der Sensoreinheit 11 nach den Figuren 2 und 3 aus Flachmaterial. Dies kann z.B. auch als eine flexible Leiterplatte ausgeführt sein.

So ist das Sensorelement 12 unter Verwendung von PVDF als ein flacher Streifen, z.B. als Folie, ausgebildet, wobei die Leitungen 13, 14 Flachleiter, z.B. Kupferleiterbahnen einer flexiblen Leiterplatte oder ähnliches sein können. Damit ist eine sehr flache Gestaltung der Erfassungseinrichtung 10 möglich.

Alternativ kann das Sensorelement 12 als ein räumliches Element mit Erhebungen und Senkungen ausgestaltet sein, welches um mehrere Achsen und ggf. der Länge nach elastisch nachgiebig gestaltet ist. Bei Beaufschlagung einer Betätigungskraft 21 verformt sich das Sensorelement 12 selbst und die an dem Sensorelement 12 angesetzten Leitungen 13, 14 erfassen das durch die Verformung erzeugte elektrische Signal. Eine weitere Ausgestaltung eines solchen Sensorelements 12 weist Öffnungen auf, wobei das Sensorelement 12 selbst nach Art eines Gitters oder Netzes ausgebildet ist. Alternativ kann das gitter- oder netzförmige Sensorelement 12 als ebenes und flaches Element ausgebildet sein.

Die Erfindung wird durch die oben beschriebenen Ausführungsbeispiele nicht eingeschränkt, sondern sie ist im Rahmen der beigefügten Ansprüche modifizierbar.

So ist es z.B. denkbar, dass zusätzlich zu der Erfassungseinrichtung 10 mit dem Piezo-Kabel als Sensoreinheit 11 weitere Sensoren, z.B. mit biegeempfindlichen Widerständen und ähnliches verwendet werden können.

Bei der Auswertung der Signale der Erfassungseinrichtung kann eine von dem Piezo-Kabel gelieferte Spannung, ggf. nach der genannten Verstärkung und/oder Filterung, analysiert werden. Dazu kann mindestens ein Schwellwert definiert sein, mit dem eine Aktion der angeschlossenen Steuereinrichtung des Möbelantriebs verbunden ist, beispielsweise ein Verlangsamen, ein Stoppen und/oder eine Bewegungsrichtungsumkehr eines angeschlossenen Verstellantriebs.

Anmeldungsgemäß wird ein Spannungsverlauf analysiert, um beispielsweise eine Zeitdauer zu ermitteln, für die ein Schwellenwert überschritten wird. Es kann auch eine Steigung des Signals ermittelt werden, die mit Schwellenwerten für diese Größe verglichen wird. Die Analyse des Zeitverlaufs und auch insbesondere der Steigung kann Aufschluss über die Art des detektierten Ereignisses geben.

Es können dadurch z.B. auch Einklemmfälle von Erschütterungen, die ebenfalls ein Signal generieren können, unterschieden werden. In einer bevorzugten Weiterbildung kann vorgesehen, dass bestimmte Erschütterungen wie z.B. Klopfen auf eine Tischplatte oder Antippen der Tischplatte in einen bestimmten, vorgegebenen Rhythmus (Muster) erkannt werden. Ein oder mehrere Klopf- bzw. Tippmuster können beispielsweise voneinander unterschieden werden und beispielsweise zur Steuerung der Verstellantriebe verwendet werden.

Es kann auch vorgesehen sein, dass die Steuereinrichtung oder die Überwachungseinheit des Möbelantriebs mindestens einen separaten Signal- oder Schaltausgang aufweist, der nach Erkennen eines vorgegebenen oder anlernbaren Klopf- bzw. Tippmusters aktiviert wird und angeschlossene Geräte, wie z.B. eine Leuchte, ansteuert bzw. schaltet.

Die Überwachungseinheit kann als analog arbeitende elektronische Schaltung aufgebaut sein. Alternativ oder abschnittsweise kann die Überwachungseinheit ach eine digital arbeitende Schaltung sein und einen Mikrocontroller aufweisen, der ein Programm mit einem oder mehreren Programmabschnitten aufweist.

Dabei kann in einer Ausführung wenigstens ein Programmabschnitt vorgesehen sein, welcher im Rahmen des lauffähigen Programms des Mikrocontrollers die eingangs genannte Filteranalyse beziehungsweise die eingangs genannte Unterscheidungskraft vornimmt, ob nun ein detektiertes Signal zu einem Einklemmfall korrespondiert oder nicht. Maßgebend hierfür ist (ebenfalls wie eingangs beschrieben) der Charakter beziehungsweise der Verlauf des Signals selbst. Liegt beispielsweise die zeitliche Steigung des Signals innerhalb vorbestimmter Schwellenwertgrenzen, so liegt ein Einklemmfall vor.

Ferner können mehrere Parameter durch den jeweiligen Programmabschnitt logisch miteinander verknüpft sein. Ist die Steigung des Signals deutlich höher und liegt innerhalb anderer Schwellwertgrenzen und fällt das Signal innerhalb eines vorbestimmten Zeitabschnitts wieder ab, wird es sich um einen Störimpuls handeln. Wiederholt sich jedoch das Signal innerhalb einer vorgegebenen Zeitspanne mit einer vorbestimmten Anzahl, bewertet dies der jeweilige Programmabschnitt als gewollte Handlung und des Benutzers und führt die eingangs genannte Maßnahme beispielsweise das Schalten einer Lampe aus.

### Bezugszeichenliste

- 1: Möbel
- 2: Platte
- 3: Standbein
- 4: Elektromotorischer Möbelantrieb
- 4a, 4b: Verstellantrieb
- 5: Steuervorrichtung
- 5a, 5b: Antriebsleitung
- 6: Bedieneinheit
- 6a: Übertragungsstrecke
- 7: Überwachungseinheit
- 7a: Anschlussleitung
- 7b: Verbindungsleitung
- 8: Klemmkante
- 9: Überwachungsbereich
- 10: Erfassungseinrichtung
- 11: Sensoreinheit
- 12: Sensorelement
- 13, 14: Leitung
- 15: Isolierung
- 16: Mantel
- 17: Träger
- 18: Befestigungsseite
- 19: Anschlussseite
- 20: Betätigungsseite
- 21: Betätigungskraft

## Patentansprüche

1. Elektromotorischer Möbelantrieb (4) zur Verstellung von beweglichen Bauteilen eines Möbels (1), insbesondere Funktionsmöbels, aufweisend mindestens einen elektromotorischen Verstellantrieb (4a, 4b) mit einer Steuervorrichtung (5) und mindestens einer Bedienungseinrichtung (6), eine Überwachungsvorrichtung (7) mit mindestens einer Erfassungseinrichtung (10) zur Überwachung mindestens eines Überwachungsbereiches (9) und Bildung eines Einklemmschutzes des zuzuordnenden Möbels (1), wobei die mindestens eine Erfassungseinrichtung (10) mindestens eine Sensoreinheit (11) aufweist, die als ein Piezo-Kabel ausgebildet ist oder ein Piezo-Kabel umfasst, **dadurch gekennzeichnet, dass** die Überwachungsvorrichtung (7) dazu eingerichtet ist, Signale der mindestens einen Erfassungseinrichtung (10) im Hinblick auf einen Signalverlauf auszuwerten und anhand des Signalverlaufs Signale nach verschiedenen Ereignissen zu diskriminieren, und dass die Überwachungsvorrichtung (7) und die Steuervorrichtung (5) dazu eingerichtet sind, nach einem Erkennen bestimmter Ereignisse den mindestens einen elektromotorischen Verstellantrieb (4a, 4b) zu verlangsamen, zu stoppen und/oder in seiner Bewegungsrichtung umzukehren.

2. Elektromotorischer Möbelantrieb (6) nach Anspruch 1, bei dem die Sensoreinheit (11) mit mindestens einem Träger (17) als Unterfütterung versehen ist.

3. Elektromotorischer Möbelantrieb (6) nach Anspruch 1 oder 2, bei dem die Sensoreinheit (11) mit mindestens einem Mantel (16) versehen ist.

4. Elektromotorischer Möbelantrieb (6) nach einem der vorhergehenden Ansprüche, bei dem
die Sensoreinheit (11) nach Verformung durch eine Betätigungskraft (21) automatisch rückstellbar ist.

5. Elektromotorischer Möbelantrieb (6) nach einem der vorhergehenden Ansprüche, bei dem
die Sensoreinheit (11) zwei elektrisch leitende Leitungen (13, 14) als Anschlussleitungen aufweist.

6. Elektromotorischer Möbelantrieb (6) nach einem der vorhergehenden Ansprüche, bei dem
die Sensoreinheit (11) ein Piezo-Kabel mit rundem Querschnitt aufweist.

7. Elektromotorischer Möbelantrieb (6) nach einem der vorhergehenden Ansprüche, bei dem
die Sensoreinheit (11) eine PVDF-Schicht aufweist.

8. Elektromotorischer Möbelantrieb (6) nach Anspruch 7, bei dem
die Sensoreinheit (11) ein als Flachkabel ausgebildetes Piezo-Kabel aufweist.

9. Elektromotorischer Möbelantrieb (6) nach Anspruch 8, bei dem
das Flachkabel eine flexible Leiterplatte ist.

10. Elektromotorischer Möbelantrieb (6) nach einem der vorhergehenden Ansprüche, bei dem
die Überwachungsvorrichtung (7) dazu eingerichtet ist, die Signale der mindestens einen Erfassungseinrichtung (10) auch im Hinblick auf eine Amplitude auszuwerten.

11. Elektromotorischer Möbelantrieb (6) nach Anspruch 10, bei dem
die Überwachungsvorrichtung (7) dazu eingerichtet ist, auch anhand der Amplitude die Signale nach verschiedenen Ereignissen zu diskriminieren.

12. Elektromotorischer Möbelantrieb (6) nach einem der Ansprüche 1 bis 11, aufweisend einen separaten Signal- oder Schaltausgang, der aktiviert wird, wenn ein vorgebbares Ereignis erkannt wird.

13. Möbel (1) mit mindestens einem elektromotorischen Möbelantrieb (4) nach einem der vorhergehenden Ansprüche.

## Claims

1. Electromotive furniture drive (4) for adjusting movable components of an item of furniture (1), in particular functional furniture, comprising at least one electromotive adjustment drive mechanism (4a, 4b) having a control device (5) and at least one operating device (6), a monitoring device (7) having at least one detection device (10) for monitoring at least one monitoring region (9) and forming an anti-trap protection system for the item of furniture (1) to be assigned, wherein the at least one detection device (10) has at least one sensor unit (11) which is designed as a piezo cable or comprises a piezo cable, **characterized in that**
the monitoring device (7) is set up to evaluate signals from the at least one detection device (10) with regard to a signal characteristic and discriminate signals after various events on the basis of the signal characteristic, and that the monitoring device (7) and the control device (5) are set up for slowing down, stopping and/or reversing in its direction of movement the at least one electromotive adjusting drive (4a, 4b) after detection of certain events.

2. Electromotive furniture drive (6) according to claim 1, wherein the sensor unit (11) is provided with at least one support (17) as underpadding.

3. Electromotive furniture drive (6) according to claim 1 or 2, wherein the sensor unit (11) is provided with at least one sheath (16).

4. Electromotive furniture drive (6) according to one of the preceding claims, wherein the sensor unit (11) can be automatically reset after deformation by an actuating force (21).

5. Electromotive furniture drive (6) according to one of the preceding claims, wherein the sensor unit (11) has two electrically conductive lines (13, 14) as connection cables.

6. Electromotive furniture drive (6) according to one of the preceding claims, wherein the sensor unit (11) has a piezo cable with a round cross-section.

7. Electromotive furniture drive (6) according to one of the preceding claims, wherein the sensor unit (11) comprises a PVDF layer.

8. Electromotive furniture drive (6) according to claim 7, wherein the sensor unit (11) has a piezo cable formed as a flat cable.

9. Electromotive furniture drive (6) according to claim 8, wherein the flat cable is a flexible printed circuit board.

10. Electromotive furniture drive (6) according to one of the preceding claims, wherein the monitoring device (7) is set up to evaluate signals from the at least one detection device (10) also with regard to an amplitude.

11. Electromotive furniture drive (6) according to claim 10, wherein the monitoring device (7) is set up to discriminate signals after various events also on the basis of the amplitude.

12. Electromotive furniture drive (6) according to one of claims 1 to 11, comprising a separate signal or switching output which is activated when a predeterminable event is recognized.

13. Item of furniture (1) having at least one electromotive furniture drive (4) according to one of the preceding claims.

## Revendications

1. Entraînement à moteur électrique pour meuble (4), permettant le réglage de composants mobiles d'un meuble (1), en particulier d'un meuble fonctionnel, présentant au moins un entraînement de réglage à moteur électrique (4a, 4b) avec un dispositif de commande (5) et au moins un moyen de manœuvre (6), un dispositif de surveillance (7) avec au moins un moyen de détection (10) pour surveiller au moins une zone de surveillance (9) et former une protection anti-pincement du meuble (1) à associer, dans lequel ledit au moins un moyen de détection (10) présente au moins une unité de détection (11) qui est réalisée sous la forme d'un câble piézoélectrique ou qui comprend un câble piézoélectrique, **caractérisé en ce que** le dispositif de surveillance (7) est conçu pour évaluer les signaux dudit au moins un moyen de détection (10) par rapport à un profil de signal et pour discriminer des signaux selon différents événements à partir du profil de signal, et que le dispositif de surveillance (7) et le dispositif de commande (5) sont conçus pour ralentir, arrêter et/ou inverser le sens de déplacement d'au moins un entraînement de réglage à moteur électrique (4a, 4b) après détection de certains événements.

2. Entraînement à moteur électrique pour meuble (6) selon la revendication 1, dans lequel l'unité de détection (11) est munie d'au moins un support (17) en tant que pièce d'appui.

3. Entraînement à moteur électrique pour meuble (6) selon la revendication 1 ou 2, dans lequel l'unité de détection (11) est munie d'au moins une enveloppe (16).

4. Entraînement à moteur électrique pour meuble (6) selon l'une des revendications précédentes, dans lequel l'unité de détection (11) peut être rappelée automatiquement après déformation par une force d'actionnement (21).

5. Entraînement à moteur électrique pour meuble (6) selon l'une des revendications précédentes, dans lequel l'unité de détection (11) présente deux lignes électriquement conductrices (13, 14) en tant que lignes de connexion.

6. Entraînement à moteur électrique pour meuble (6) selon l'une des revendications précédentes, dans lequel l'unité de détection (11) présente un câble piézoélectrique de section ronde.

7. Entraînement à moteur électrique pour meuble (6) selon l'une des revendications précédentes, dans lequel l'unité de détection (11) présente une couche de PVDF.

8. Entraînement à moteur électrique pour meuble (6) selon la revendication 7, dans lequel l'unité de détection (11) présente un câble piézoélectrique réalisé sous la forme d'un câble plat.

9. Entraînement à moteur électrique pour meuble (6) selon la revendication 8, dans lequel le câble plat est une carte de circuit imprimé flexible.

10. Entraînement à moteur électrique pour meuble (6) selon l'une des revendications précédentes, dans lequel le dispositif de surveillance (7) est conçu pour évaluer les signaux dudit au moins un moyen de détection (10) également en ce qui concerne une amplitude.

11. Entraînement à moteur électrique pour meuble (6) selon la revendication 10, dans lequel le dispositif de surveillance (7) est conçu pour discriminer les signaux selon différents événements également à partir de l'amplitude.

12. Entraînement à moteur électrique pour meuble (6) selon l'une des revendications 1 à 11, présentant une sortie de signalisation ou de commutation séparée qui est activée lorsqu'un événement prédéfinissable est détecté.

13. Meuble (1) doté d'au moins un entraînement à moteur électrique pour meuble (4) selon l'une des revendications précédentes.
